# EUROPEAN PATENT APPLICATION

(11) **EP 4 610 612 A1**
(43) Date of publication of application: **03.09.2025**
(21) Application number: 24159977.8
(22) Date of filing: 27.02.2024
(51) Int. Cl.: G01L 5/12, G01L 5/20, B63H 1/10

(54) **FORCE MEASUREMENT SYSTEM FOR CYCLOIDAL MARINE PROPULSION SYSTEM**

(71) Applicant: ABB SCHWEIZ AG, 5400 Baden (CH)
(72) Inventor: PELLINEN, Petri, 00980 Helsinki (FI); PELJO, Veli-Pekka, 00980 Helsinki (FI); MAKSIMAINEN, Aki, 00240 Helsinki (FI)
(74) Representative: Zimmermann & Partner Patentanwälte mbB

(57) **Abstract**

A force measurement system for a cycloidal marine propulsion system is provided. The force measurement system comprises a rotating wheel, rotatable with respect to a hull of a marine vessel, and a plurality of electrically driven rotating blades attached to the rotating wheel and rotatable with respect to the rotating wheel, the force measurement system comprising at least two distance sensors, each being configured to determine a signal of a distance between a first component of the cycloidal marine propulsion system, that is rotatable with respect to a second component of the cycloidal marine propulsion system, and the second component of the cycloidal marine propulsion system; and a force determining unit, configured to determine a direction and/or a magnitude of a force acting upon the first component of the cycloidal marine propulsion system using the signals of the distance sensors.

## Description

### TECHNICAL FIELD

Embodiments of the present disclosure relate to a force measurement system for a cycloidal marine propulsion system comprising at least two distance sensors and a force determining unit. Further embodiments relate to a method of measuring a direction and/or force acting upon a cycloidal marine propulsion system.

### BACKGROUND

Cycloidal marine propulsion systems provide an efficient way to propel marine vessels. Further, cycloidal marine propulsion systems allow for an improved maneuverability of marine vessels. In cycloidal marine propulsion systems, a rotating wheel with rotatable blades attached to the rotating wheel provides thrust. A direction and amount of the thrust may be controlled via a rotating speed of the rotating wheel and via a pitch of the rotatable blades. In the cycloidal marine propulsion system, the pitch of the rotating blades may be controlled individually. For each blade of the rotating blades, a thrust force and a side force is generated.

From operating data of the cycloidal marine propulsion system, exemplarily the drive torque, the cycloidal marine propulsion system can be controlled to maneuver as desired or specified. However, high precision maneuvering, e.g. like maneuvering in DP (dynamic positioning) modes, as well as improving a hydrodynamic efficiency of the cycloidal marine propulsion system to reduce fuel costs and emission characteristics might require a more accurate feedback. Improving the feedback to a control system of the cycloidal marine propulsion system and providing a more accurate and optimized control of the cycloidal marine propulsion system might be desired. Further, it might be desired to provide an indication of an actual force direction to an operator of the cycloidal marine propulsion system.

### DISCLOSURE OF THE INVENTION

In the view of the foregoing, the present disclosure is directed to a force measurement system for a cycloidal marine propulsion system, and a method for measuring a direction and/or a magnitude of a force acting upon a cycloidal marine propulsion system.

According to an aspect of the present disclosure, a force measurement system for a cycloidal marine propulsion system, comprising a rotating wheel, rotatable with respect to a hull of a marine vessel, and a plurality of electrically driven rotating blades attached to the rotating wheel and rotatable with respect to the rotating wheel is provided. The force measurement system comprises at least two distance sensors, each being configured to determine a signal of a distance between a first component of the cycloidal marine propulsion system, that is rotatable with respect to a second component of the cycloidal marine propulsion system, and the second component of the cycloidal marine propulsion system; a force determining unit, configured to determine a direction and/or a magnitude of a force acting upon the first component of the cycloidal marine propulsion system using the signals of the distance sensors.

According to another aspect of the present disclosure, a cycloidal marine propulsion system comprising a force measurement system according to any of the embodiments described herein is provided.

According to another aspect of the present disclosure, a marine vessel comprising a cycloidal marine propulsion system with a force measurement system according to any of the embodiments described herein is provided.

According to another aspect of the present disclosure, a method of measuring a direction and/or a magnitude of a force acting upon a cycloidal marine propulsion system, comprising a rotating wheel and a plurality of electrically driven blades attached to the rotating wheel, is provided. The method comprises determining, in at least two directions, a distance between a first component of the cycloidal marine propulsion system, that is rotatable with respect to a second component of the cycloidal marine propulsion system, and the second component of the cycloidal marine propulsion system; determining a direction and/or a magnitude of a force acting upon the first component of the cycloidal marine propulsion system based on the distances; determining the direction and/or the magnitude of the force acting upon the cycloidal marine propulsion system based on the direction and/or the magnitude of the force acting upon the first component of the cycloidal marine propulsion system.

According to another aspect of the present disclosure, a method of controlling a cycloidal marine propulsion system, using a force information obtained from a force measurement system according to any of the embodiments described herein is provided.

According to some embodiments, the cycloidal marine propulsion system is configured to propel a marine vessel. The marine vessel comprises seagoing or inland marine vessels. In particular, the marine vessel comprises ships and boats. In some embodiments, the marine vessel comprises ferries, in particular single- and double-ended ferries, cruise ships, water buses, yachts. In some embodiments, the marine vessel comprises offshore energy vessels, in particular service operation vessels (SOVs), cable laying vessels (CLVs), foundation installation vessels (FIVs), offshore construction (OCVs) and support vessels (OSVs), platform supply vessels (PSVs), and anchor-handling tug supply vessels (AHTS). In some embodiments, the marine vessel comprises research and survey vessels or other special purpose vessels. According to some embodiments, the marine vessel comprises merchant ships, in particular for transporting goods.

The marine vessel comprises a hull. According to some embodiments, the rotating wheel is attached to the hull of the marine vessel, in particular at the bottom of the hull. According to some embodiments, the hull comprises a recess. In particular, the recess of the hull is configured for receiving the rotating wheel of the cycloidal marine propulsion system. The rotating wheel is supported in the hull by at least one support bearing. Between the hull and the rotating wheel, a gap is present. In an idle state, with no force acting upon the rotating wheel, the gap may have a width of at least 0.5 mm, 1 mm or 2 mm. In some embodiments, the gap may at most be 5 mm or 10 mm. In some embodiments, the marine vessel comprises a rotating wheel electric motor, configured to drive the rotating wheel of the cycloidal marine propulsion system. In some embodiments, a prime mover of the marine vessel is mechanically coupled to the rotating wheel.

A plurality of electrically driven rotating blades are attached to the rotating wheel. In particular, two, three, four, five, six or more rotating blades may be attached to the rotating wheel. The rotating blades are rotatable with respect to the rotating wheel. In particular, the rotating blades are individually rotatable with respect to the rotating wheel. In other words, each of the plurality of rotating blades can be controlled individually, in particular with respect to the pitch of each of the rotating blades. For each of the rotating blades, the rotating wheel comprises a rotating blade electric motor driving the respective rotating blade. In some embodiments, the pitch of the plurality of rotating blades may be adjusted with no angular restriction. In particular, the plurality of rotating blades may be rotatable by at least 360°. The rotating wheel comprises a plurality of recesses to receive the plurality of electrically driven rotating blades. Between each of the plurality of recesses of the rotating wheel and each of the respective rotating blades, a gap is present. Each of the plurality of rotating blades may be supported in the rotating wheel by at least two bearings.

At least two distance sensors are configured to determine a signal of distance between a first component of the cycloidal marine propulsion system and a second component of the cycloidal marine propulsion system. The first component of the cycloidal marine propulsion system is rotatable with respect to the second component of the cycloidal marine propulsion system. In some embodiments, the distance sensors may be attached to the first component of the cycloidal marine propulsion system. In some embodiments, the distance sensors may be attached to the second component of the cycloidal marine propulsion system.

In some embodiments, the first component may be the rotating wheel and the second component may be the hull of the vessel, in particular the recess of the hull of the vessel. The at least two distance sensors determine a signal of distance between the rotating wheel and the hull of the vessel. In particular, the distance sensors determine a width of a gap between the recess of the hull and the rotating wheel. In some embodiments, the distance sensors may be attached to the hull. In some embodiments, the distance sensors may be attached to the rotating wheel.

In some embodiments, the first component may be a rotating blade of the plurality of rotating blades and the second component may be the rotating wheel. The at least two distance sensors determine a signal of a distance between the rotating blade and the rotating wheel. In particular, the distance sensor determine a width of a gap between the rotating wheel and the rotating blade. In some embodiments, the distance sensors may be attached to the rotating wheel. In some embodiments, the distance sensors may be attached to the rotating blade.

According to some embodiments, the force measurement system comprise at least two distance sensors to determine a distance between the rotating wheel and the hull of the vessel and comprise at least two distance sensors for at least one of the plurality of rotating blades, in particular for all of the rotating blades. Determining the direction and/or the magnitude of the force acting upon both the rotating wheel and at least one of the plurality of rotating blades advantageously allows to improve the control of the cycloidal marine propulsion system and/or allows to operate the cycloidal marine propulsion system more efficiently. In some embodiments, mechanical blade overloading may be avoided, advantageously avoiding operating conditions with an overly high wear-and-tear or an overly high risk of defects.

The force measurement system comprises at least two distance sensors. In some embodiments, the force measurement system comprises at least two, three, four, five or more distance sensors. In some embodiments, the force measurement system comprises at most ten distance sensors. At least two distance sensors advantageously allow to determine an overall shift of the first component with respect to the second component in direction and magnitude. Additional distance sensors, in particular a third, a fourth, or a fifth distance sensor may advantageously provide an improved resolution and/or redundancy.

The distance sensors are arranged such that changes in a position of the first component with respect of the second component are measured in two directions, exemplarily in an x- and y-direction. In some embodiments, two of the distance sensors may be arranged perpendicular with respect to each other. In some embodiments, two of the distance sensors may have an angle of at least 5°, 15°, 30° 45°, 60°, 75° or 90° and of at most 105°, 120°, 135°, 150° or 175° with respect to each other in a plane substantially perpendicular to the rotation axis of the first component.

The distance sensors comprise any sensor that is configured for determining a distance or proximity signal. In particular, the distance sensor may be a capacity based sensor, an inductivity based sensor, an optical sensor, a laser sensor or a magnetic sensor. In some embodiments, the force measurement system may comprise distance sensors of a plurality of sensor types. In particular, the sensor types may be selected to use and to combine advantages of specific sensor types. In some embodiments, the distance sensors of the force measurement system are of the same type. In particular, having sensors of the same type advantageously improves maintenance and spare part logistics as well as costs. In some embodiments, the distance sensors are calibrated.

The force measurement system comprises a force determining unit. The force determining unit receives the distance signals of the at least two distance sensors. In some embodiments, the distance signals are raw signals of the distance sensor, in particular a current or a voltage of the distance sensor. In some embodiments, the distance signals are processed signals, in particular processed by the distance sensors. The distance signals may be signals in a unit of length. In some embodiments, the distance signals may be absolute signals. In some embodiments, the signals may be relative signals, in particular describing a change of distance, exemplarily with respect to an idle state.

In some embodiments, the force measurement system is calibrated. Exemplarily, a calibration maps a signal of a distance sensor to a force acting upon the first component. Calibration might be carried periodically, e.g. by using defined operating conditions in calm water. Calibration can be advantageously performed in a dock by exerting a well-defined force (e.g. by pulling) upon the cycloidal marine propulsion system and calibrating the force measurement system accordingly.

The force determining unit is configured to determine a direction and/or a magnitude of a force acting upon the first component of the cycloidal marine propulsion system. The force determining unit uses information on the position of the plurality of distance sensors, in particular the angle between the distance sensors, to determine the direction and/or the magnitude of the force acting upon the first component.

According to some embodiments, the force determining unit is configured to determine a direction and/or a magnitude of a force acting upon the cycloidal marine propulsion system based on the force acting upon the first component of the cycloidal marine propulsion system. In some embodiments, in particular for the rotating wheel being the first component, the force acting upon the first component is the force acting upon the cycloidal marine propulsion system. In some embodiments, in particular for the rotating blade being the first component, the force determining unit determines the force acting upon the cycloidal marine propulsion system based upon the force acting upon the rotating blade. The force determining unit may use information on the force acting upon a plurality of rotating blades to determine the force acting upon the cycloidal marine propulsion system, in particular by summing the forces acting upon the plurality of rotating blades up.

In some embodiments, determining the direction and/or the magnitude of the force acting upon the first component comprises averaging the signal of the distance, in particular over at least one rotation of the rotating wheel. Averaging the signal of the distance advantageously allows to reduce measurement noise or measurement inaccuracies, exemplarily from an asymmetric first component or second component, eccentricity of rotation or from bearing tolerances. In some embodiments, the signal of the distance may be averaged over time, exemplarily over a time of 1 second, 2 seconds or 5 seconds.

According to some embodiments, determining the direction and/or the magnitude of the force acting upon the first component comprises averaging a force acting upon the first component over at least one rotation or over a time duration.

According to some embodiments, determining the direction and/or the magnitude of the force acting upon the first component of the cycloidal marine propulsion system comprises a comparison with calibration data. In particular, calibration data are employed to determine the direction and/or the magnitude of the force from the signals of the distance sensors.

According to some embodiments, determining the direction and/or the magnitude of the force acting upon the first component of the cycloidal marine propulsion system comprises simulating the first component in a digital twin based upon the distance signals. According to some embodiments, determining the direction and/or the magnitude of the force acting upon the cycloidal marine propulsion system comprises simulating the cycloidal marine propulsion system in a digital twin based on the direction and/or the magnitude of the force acting upon the first component of the cycloidal marine propulsion system.

Typical digital twin models comprise interactions between components of the cycloidal marine propulsion system. In particular, the digital twin may describe an influence of forces acting upon the first component, exemplarily the rotating blade, upon the second component, exemplarily the rotating wheel. The digital twin model may comprise information on operational variables of the cycloidal marine propulsion system, in particular on the eccentricity and/or on the Strouhal number of the rotating blades. According to some embodiments, the digital twin may receive data on environmental conditions of the marine vessel, particularly a weather condition, a sea condition, exemplarily a marine current or a water temperature, or a sea floor topography.

According to some embodiments, the signals of the distance sensors may advantageously be employed to improve the digital twin model. The digital twin model can be employed to control the cycloidal maritime propulsion system.

Controlling the cycloidal marine propulsion system comprises modifying the rotating speed of the rotating wheel and/or the pitch of the rotating blades. In particular, a path of the pitch of the rotating blades through one rotation cycle of the rotating wheel can be modified. The cycloidal marine propulsion system may be controlled in view of an operator command, in particular with respect to a desired thrust, speed or fuel efficiency, a vibration or a noise of the cycloidal marine propulsion system.

According to some embodiments, the cycloidal marine propulsion system is controlled using a force information, in particular the direction or the force acting upon the cycloidal marine propulsion system, obtained from the force measurement system. According to some embodiments, a marine vessel with a cycloidal marine propulsion system ia controlled using the force information, in particular the direction or the force acting upon the cycloidal marine propulsion system, obtained from the force measurement system. Exemplarily, the speed or direction of the marine vessel can be controlled based upon the force information obtained from the force measurement system.

According to some embodiments, the cycloidal marine propulsion system is controlled in view of mechanical constraints, in particular to avoid mechanical overload or to reduce wear-and-tear, exemplarily of the rotating blades. Employing a digital twin model advantageously allows to incorporate multiple variables and complex dependencies to improve the direction and/or the magnitude of the force acting upon the cycloidal marine propulsion system determined.

In some embodiments, the distance sensors determine a signal of a distance between the recess of the hull and the rotating wheel. The cycloidal marine propulsion system defines a vertical axis, that may be substantially perpendicular to the water surface. The distance sensors may be arranged at substantially the same position on the vertical axis as the lower bearing supporting the rotating blade of the rotating wheel. In some embodiments, the distance sensors may be arranged substantially at an end of the recess of the hull, in particular at the bottom end of the recess facing the sea floor. A position of the distance sensor at, or close to, the bottom end of the recess is advantageous as the change in the width of the gap at a given force acting upon the rotating wheel is largest, which improves the resolution of the distance sensor, and thus the resolution of the direction and/or magnitude of the force determined.

In some embodiments, the distance sensor may be arranged at a top end of the recess, in particular at a top end facing towards the sea surface. A position of the distance sensor configured for measuring the gap between a top side of the rotating wheel and a top end of the recess advantageously reduces influences from external factors, in particular from seawater, water plants such as algae, or other contaminations. A position of the distance sensor at a top end of the recess further reduces advantageously the exposure to mechanical impacts.

The rotating wheel is supported in the marine vessel by a support bearing. In particular, the bearing may be arranged between the recess of the hull and the rotating wheel electric motor driving the rotating wheel. According to some embodiments, the distance sensor may be arranged adjacent to the bearing.

In some embodiments, the distance sensor is positioned within the hull. In particular, the distance sensor may be arranged between the support bearing of the rotating wheel and a rotating wheel rotor of the rotating wheel electric motor driving the rotating wheel. A distance sensor within the hull is particularly well-protected against contaminations or mechanical impacts. Within the hull, the distance sensors are particularly easy to maintenance and calibrate.

In some embodiments, the distance sensors determine a signal of a distance between the rotating blade and the rotating wheel. The rotating blade is supported in the rotating wheel by at least two bearings, in particular by an upper bearing and a lower bearing. The upper bearing is closer to the sea surface than the lower bearing. The distance sensor may be arranged between two of the at least two bearings. In particular, the distance sensor may be arranged between an upper bearing and the rotor of the rotating blade electric motor driving the rotating blade. In some embodiments, the distance sensors may be arranged in the middle between two bearings, in particular where effects of bearing clearance effects may compensate. In some embodiments, a calibration compensates for bearing clearance effects. In some embodiments, a deflection of the blade at a position of the distance sensor does not exceed 2 mm, 1 mm, or 0.5 mm.

According to some embodiments, the distance sensor faces a machined track on the first component. A machined track advantageously provides a well-defined geometry. In some embodiments, the machined track is coated to provide a well-defined surface to be measured by the distance sensor.

According to some embodiments, an angular position of the rotating wheel is received by the force determining unit. The force determining unit combines the angular position with the signals of the distance sensors at the respective angular position. The force determining unit determines the direction and/or the magnitude of the force acting upon the rotating blade along an entire rotating cycle of the rotating wheel. In some embodiments, with all of the plurality of rotating blades following the same path curve for the entire rotating cycle, the force determining unit may determine the direction and/or the magnitude of the force acting upon the cycloidal marine propulsion system based upon the signals of the distance sensors of a single rotating blade.

Embodiments of the present disclosure advantageously allow to provide information on the force, in particular on a thrust force, acting upon the cycloidal marine propulsion system and/or components of the cycloidal marine propulsion system, exemplarily the rotating wheel and the rotating blades. Obtaining and using information on the force acting upon the cycloidal marine propulsion system improves the control of the marine vessel, in particular by improving the control of the cycloidal marine propulsion system. The cycloidal marine propulsion system can be operated more efficiently, in particular with respect to the hydrodynamic efficiency, and mechanical overloads may be minimized. In particular, information on the force acting upon the cycloidal marine propulsion system can be used to fine-tune a path of the rotating blades, in particular the pitch of the rotating blades. Information on the force acting upon the cycloidal marine propulsion system can be used to improve theoretical and/or computational models of the cycloidal marine propulsion system.

### BRIEF DESCRIPTION OF THE DRAWINGS

The accompanying drawings relate to embodiments of the disclosure and are described in the following:
- FIG 1: schematically illustrates a cycloidal marine propulsion system with a force measurement system according to the embodiments described herein;
- FIG 2: schematically illustrates a hull of a vessel with two cycloidal marine propulsion systems with force measurement systems according to the embodiments described herein;
- FIG 3a: schematically illustrates a force measurement system according to the embodiments described herein;
- FIG 3b: schematically illustrates the force measurement system of FIG 3a with a summary force acting upon the cycloidal marine propulsion system;
- FIG 3c: schematically a force measurement system according to the embodiments described herein;
- FIG 4a: schematically illustrates a rotating blade with a distance sensor of a force measurement system according to the embodiments described herein;
- FIG 4b: schematically illustrates a force measurement system according to the embodiments described herein;
- FIG 4c: schematically illustrates the force measurement system of FIG 4a with a summary force acting upon the cycloidal marine propulsion system;
- FIG 5: schematically illustrates a method of measuring a direction and/or a magnitude of a force acting upon a cycloidal marine propulsion system according to embodiments described herein;
- FIG 6: schematically illustrates the method of measuring a direction and/or a magnitude of a force acting upon a cycloidal marine propulsion system of FIG 5 with additional optional steps.

### DETAILED DESCRIPTION OF EMBODIMENTS

Reference will now be made in detail to the various embodiments of the disclosure, one or more examples of which are illustrated in the figures. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations. In the figures, elements may be depicted with exaggerated dimensions to improve the comprehensibility of the detailed description of embodiments. In particular, relations of lengths and widths of components shown may distorted. Further, some elements may be depicted with enlarged dimensions while other elements in the same figure are depicted, relatively, with reduced dimensions.

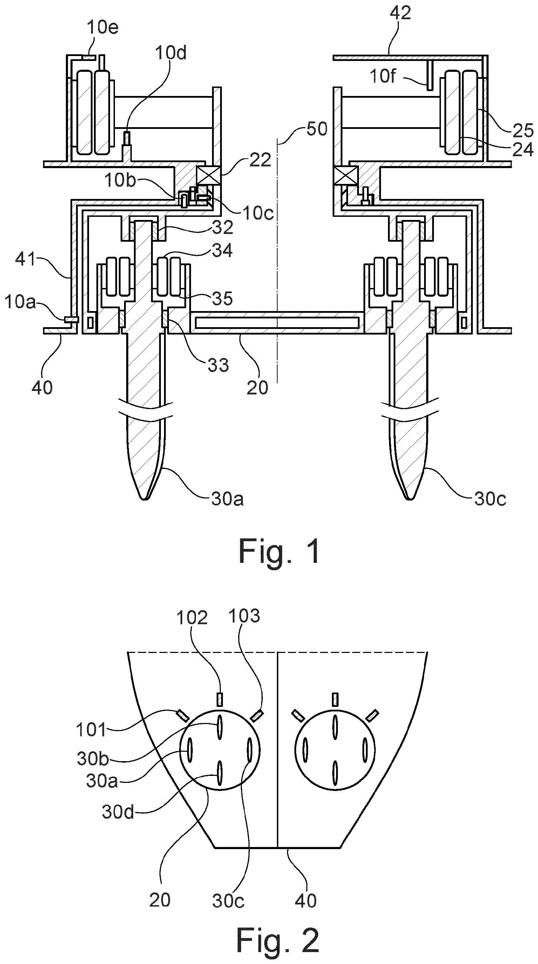

FIG 1 schematically illustrates a cycloidal marine propulsion system with a force measurement system according to the embodiments described herein. The cycloidal marine propulsion system comprises a rotating wheel 20, with a plurality of rotating blades 30a - 30d attached to the rotating wheel 20. In the plane shown in FIG 1, only rotating blades 30a and 30c are depicted. Rotating blades 30b and 30d are before and behind the plane of FIG 1 and thus not visible in FIG 1. The plurality of rotating blades 30a - 30d are rotatable with respect to the rotating wheel 20. In particular the plurality of rotating blades 30a - 30d are individually rotatable with respect to the rotating wheel 20.

The rotating wheel 20 is arranged in a recess 41 of a hull 40 of a marine vessel. The rotating wheel 20 is rotatable with respect to the hull 40. The rotating wheel 20 is supported by a support bearing 22 of the rotating wheel with respect to the hull 40. The rotating wheel 20 is configured to be driven, in particular rotated, by a rotating wheel electric motor. The rotating wheel electric motor comprises a rotating wheel stator 25 and a rotating wheel rotor 24. The rotating wheel rotor 24 is configured to rotate the rotating wheel 20. Each of the rotating blades 30a, 30c is supported by an upper bearing 32 and a lower bearing 33 with respect to the rotating wheel 20. Between the upper bearing 33 and the lower bearing 32, each of the rotating blades is driven by a rotating blade electric motor. In embodiments not shown in Fig. 1, the rotating blade electric motor is arranged outside the upper bearing 33 and the lower bearing 32. Each of the rotating blade electric motors comprises a rotating blade stator 35 and a rotating blade rotor 34.

A force measurement system for the cycloidal marine propulsion system comprises at least two distance sensors. The distance sensors are configured to determine a width of a gap between the rotating wheel 20 and the recess 41 of the hull 40. In FIG 1, six positions 10a-10f for the distance sensors within the cycloidal marine propulsion system are shown. However, as described above, the force measurement system comprises at least two distance sensors. Due to FIG 1 being a longitudinal section of the cycloidal marine propulsion system, only one distance sensor is shown. At least one other distance sensor is required but not shown in FIG 1. Positions of the distance sensors with respect to each other are shown in FIGS 2, 3a, 3b, 3c, 4b and 4c. In particular the at least one other distance sensor may be positioned perpendicular to the distance sensor shown in Fig. 1, in particular, the at least one other distance sensor may be arranged perpendicularly to the drawing plane of Fig. 1.

In a first position 10a, the distance sensors are arranged substantially at an end of the recess 41 of the hull 40. In Fig. 1, the first position 10a is arranged at substantially the same position on a vertical axis 50 as the lower bearing 33 supporting the rotating blade 30a, 30c of the rotating wheel 20. In the first position 10a, a change of a gap, and thus a signal of the distance sensor, between the recess 41 of the hull 40 and the rotating wheel 20 is largest at a given force.

In a second position 10b, the distance sensors are arranged on a horizontal section of the gap between the recess 41 and the rotating wheel 20. At the second position 10b, the distance sensors are arranged on the vertical axis 50 between the upper bearing 32 supporting the rotating blade 30a, 30c and the support bearing 22.

In a third position 10c, the distance sensors are arranged on a vertical section of the gap between the recess 41 and the rotating wheel 20. At the third position 10c, the distance sensors are arranged on the vertical axis 50 between the upper bearing 32 supporting the rotating blade 30a, 30c and the support bearing 22. At the third position 10c, the distance sensors are arranged substantially adjacent to the support bearing 22.

At a fourth position 10d, the distance sensors are arranged between the support bearing 22 of the rotating wheel 20 and the rotating wheel rotor 24. At the fourth position 10d, the distance sensors are particularly easy to maintain and are protected from influences of sea water or other mechanical impacts, since they are positioned within the hull.

At a fifth position 10e, the distance sensors are arranged to determine a distance between the rotating wheel rotor 24 and the rotating wheel stator 25. At the fifth position 10e, the distance sensors advantageously allow to additionally observe an air gap of the rotating wheel electric motor, in particular to monitor the state of the electric monitor.

At a sixth position 10f, the distance sensors are arranged to determine a distance between the rotating wheel 24 and a motor cover 42 (only partially shown in Fig. 1) of the electric motor. In particular, at the sixth position 10f, the distance sensor measures a vertical distance. At the sixth position 10f, the distance sensors are advantageously easily accessible, in particular through the motor cover 42, exemplarily through maintenance holes.

In some embodiments, the force measurement system comprises distance sensors at one of the positions 10a-10f. In some embodiments, the force measurement system comprises distance sensors at a plurality of the positions 10a-10f.

FIG 2 schematically illustrates the hull 40 of a marine vessel with two cycloidal marine propulsion systems with force measurement systems according to the embodiments described herein. For the embodiment of FIG 2, the marine vessel comprises two cycloidal propulsion system. Each cycloidal propulsion system comprises a rotating wheel 20 with four rotating blades 30a-30d. For each rotating wheel, three distance sensors 101, 102, 103 are configured to determine a signal of a distance between the rotating wheel 20 and the hull 40. The distance sensors are particularly configured to measure the width of the gap between the rotating wheel 20 and the hull 40. The distance sensors 101, 102, 103 are arranged at an angle of approximately 45° with respect to each other. In particular, two distance sensors 101, 103 are arranged substantially perpendicular to each other.

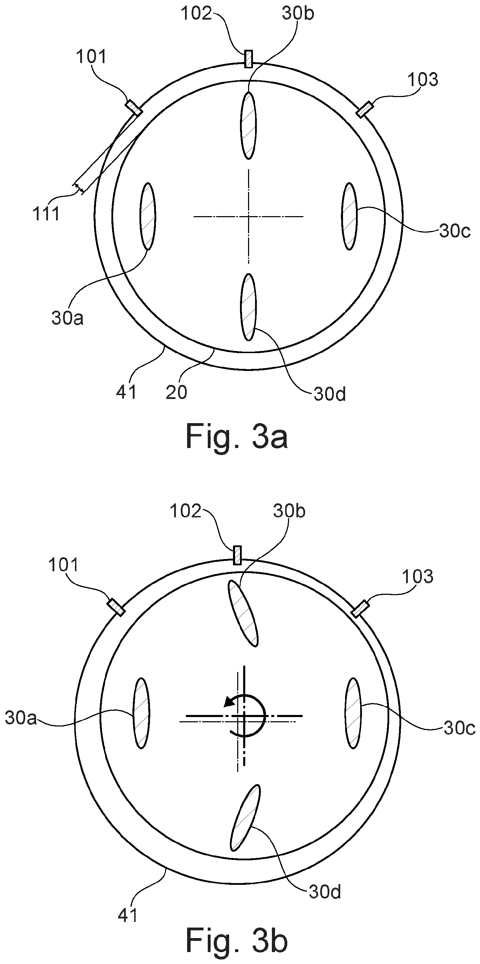

FIG 3a schematically illustrates the force measurement system for a cycloidal marine propulsion system in an idle configuration according to the embodiments described herein. In FIG 3a, the propulsion system is in an idle mode and no force is acting upon the cycloidal marine propulsion system. The rotating blades 30a-30d have the same pitch. The distance sensors 101, 102, 103 are configured to measure a distance between the recess 41 of the hull and the rotating wheel 20. In particular distance sensor 101 measures the width 111 of the gap between the rotating wheel 20 and the recess 41 of the hull.

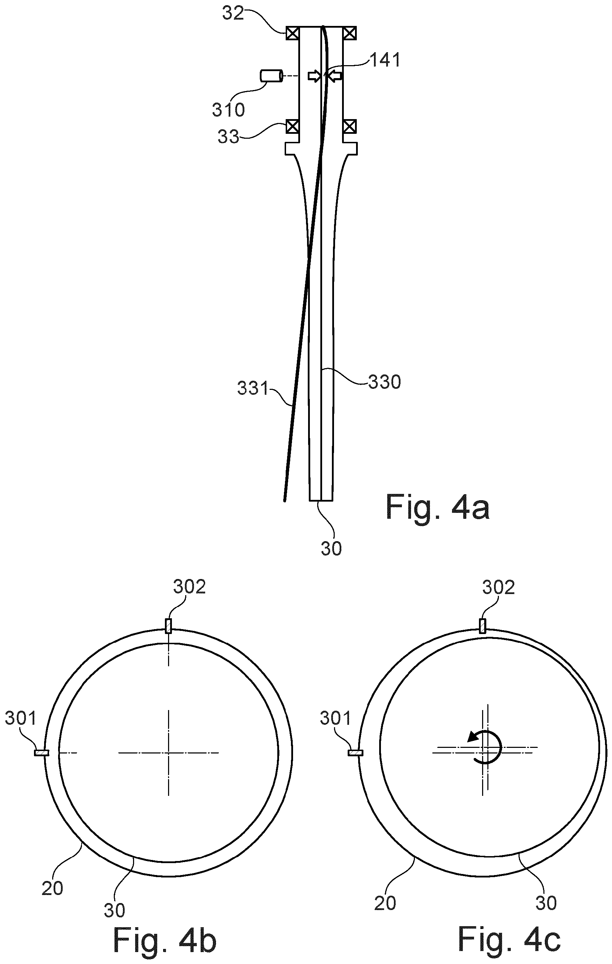

In FIG 3b, a force acts upon the cycloidal marine propulsion system. In particular, FIG 3b shows an operating configuration of the cycloidal marine system. The rotating wheel 20 is rotating counter-clockwise and the rotating blades 30b and 30d are in a pitched state with respect to the configuration of FIG 3a. The rotating wheel 20 is displaced with respect to the recess 41 of the hull. The width 111 of the gap between the rotating wheel 20 and the recess 41 of the hull measured by distance sensor 101 increases, and the widths of the gaps between the rotating wheel 20 and the recess 41 of the hull measured by distance sensors 102 and 103 decrease. The force measurement system of FIG 3a and 3b may be employed individually or in conjunction with the embodiment of FIG 4a and 4b.

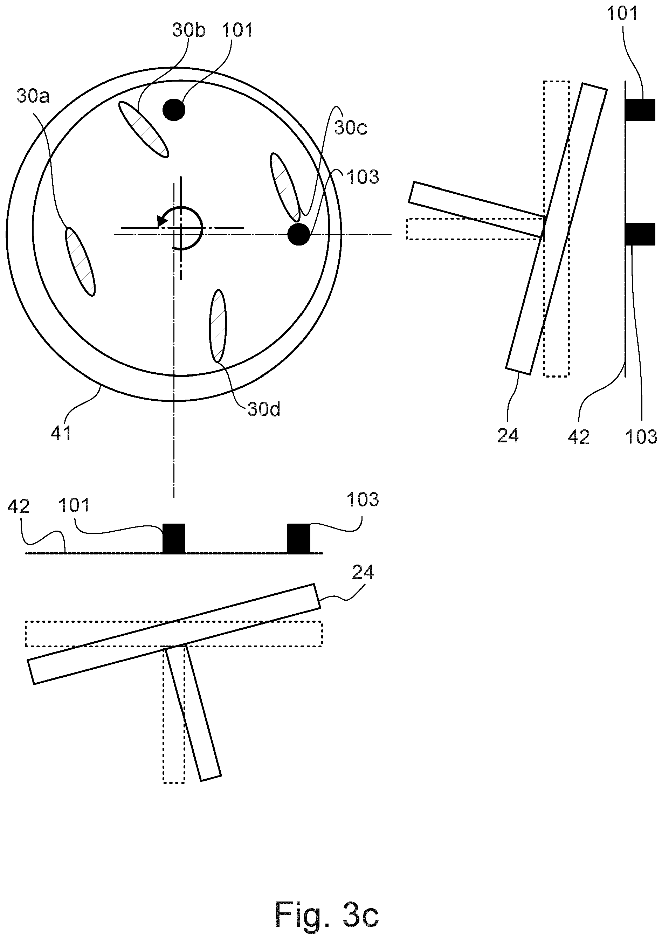

In FIG 3c, the force measurement system for a cycloidal marine propulsion system according to the embodiments described herein is illustrated. FIG 3c particularly illustrates distance sensors 101, 103 being at position 10f of FIG 1. The distance sensors are mounted at the motor cover 42 of the cycloidal marine propulsion system. In FIG 3c, a top view is shown along schematic longitudinal sections. The distance sensors 101, 103 are arranged perpendicular to each other. The distance sensors may be accessible from a side of the motor cover 42 facing away from the cycloidal marine propulsion system. In the longitudinal section only the distance sensors 101, 103, the motor cover 42 and the rotor 24 are shown. In particular the longitudinal sections of FIG 3c are not to scale but distorted.

In FIG 3c, a force acts upon the cycloidal marine propulsion system with the force direction being to the top right. The rotor 24 of the cycloidal marine propulsion system is tilted due to the force with the distance of the rotor 24 to the motor cover 42 decreasing towards the top end of the cycloidal marine propulsion system (directions as shown in FIG 3c). The distance of the rotor 24 and the motor cover 42 measured by the distance sensor 101 decreases with respect to an idle position of the rotor 24 (shown with dotted lines in FIG 3C).

The rotor 24 of the cycloidal marine propulsion system is tilted due to the force with the distance of the rotor 24 to the motor cover 42 decreasing towards the right end of the cycloidal marine propulsion system (directions as shown in FIG 3c). The distance of the rotor 24 and the motor cover 42 measured by the distance sensor 103 decreases with respect to an idle position of the rotor 24 (shown with dotted lines in FIG 3C). The force measurement system of FIG 3c may be employed individually or in conjunction with the embodiment of FIG 4a and 4b.

In FIG 4a, a rotating blade 30 with a distance sensor 310 of a force measurement system according to the embodiments described herein is schematically illustrated. The rotating blade 30 is supported by the upper bearing 32 and the lower bearing 33. At the idle configuration, as exemplarily shown in FIG 3a and 4b, no force is acting upon the rotating blade 30 with centerline 330. Once a force acts upon the rotating blade 30, the rotating blade 30 is deflected. The centerline 331 of the defected blade crosses the centerline 330 of the non-deflected rotating blade 30 at the vertical position of the upper bearing 32 and the lower bearing 33. The distance sensor 310 is arranged between the upper bearing 32 and the lower bearing 33 to determine a change 141 in the distance between rotating blade 30 and the rotating wheel.

FIG 4b and 4c schematically illustrates a force measurement system according to the embodiments described herein. In particular, the force measurement system comprises two distance sensors 301, 302 to determine a distance between the rotating blade 30 and the rotating wheel 20. The distance sensors 301 and 302 are positioned perpendicular to each other. In FIG 4b, the rotating blade 30 is in an idle position with no force acting upon the rotating blade 30. In FIG 4c, a force acts upon the rotating blade 30. The rotating blade 30 is displaced with respect to the rotating wheel 30. The width of the gap between the rotating wheel 20 and the rotating blade 30 measured by distance sensor 301 increases, and the width of the gap between the rotating wheel 20 and the rotating blade 30 measured by distance sensor 302 decreases. The force measurement system as shown in FIG 4b and 4c may be employed individually or in conjunction with the embodiment of FIG 2 and/or FIG 3a, 3b and/or 3c.

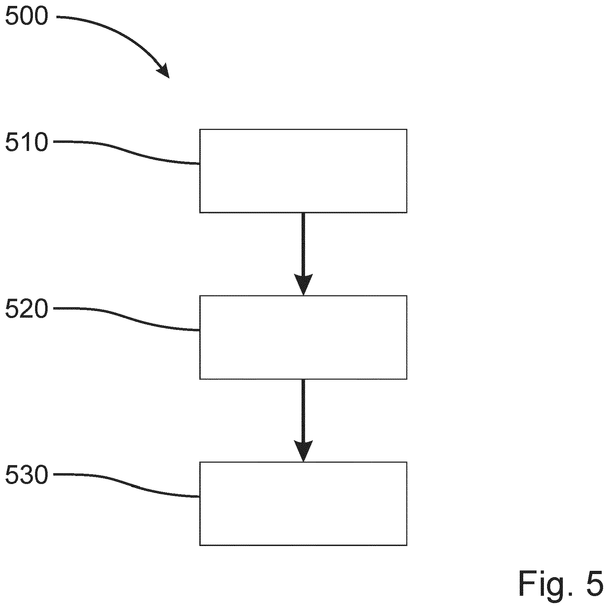

FIG 5 schematically illustrates a method 500 of measuring a direction and/or a magnitude of a force acting upon a cycloidal marine propulsion system according to embodiments described herein. The cycloidal marine propulsion system comprises a rotating wheel and a plurality of electrically driven blades attached to the rotating wheel. The method 500 comprises determining 510, in at least two directions, a distance between a first component of the cycloidal marine propulsion system, that is rotatable with respect to a second component of the cycloidal marine propulsion system, and the second component of the cycloidal marine propulsion system. The method 500 further comprises determining 520 a direction and/or a magnitude of a force acting upon the first component of the cycloidal marine propulsion system based on the distances. Based on the direction and/or the magnitude of the force acting upon the first component of the cycloidal marine propulsion system, the method 500 determines 530 the direction and/or the magnitude of the force acting upon the cycloidal marine propulsion system.

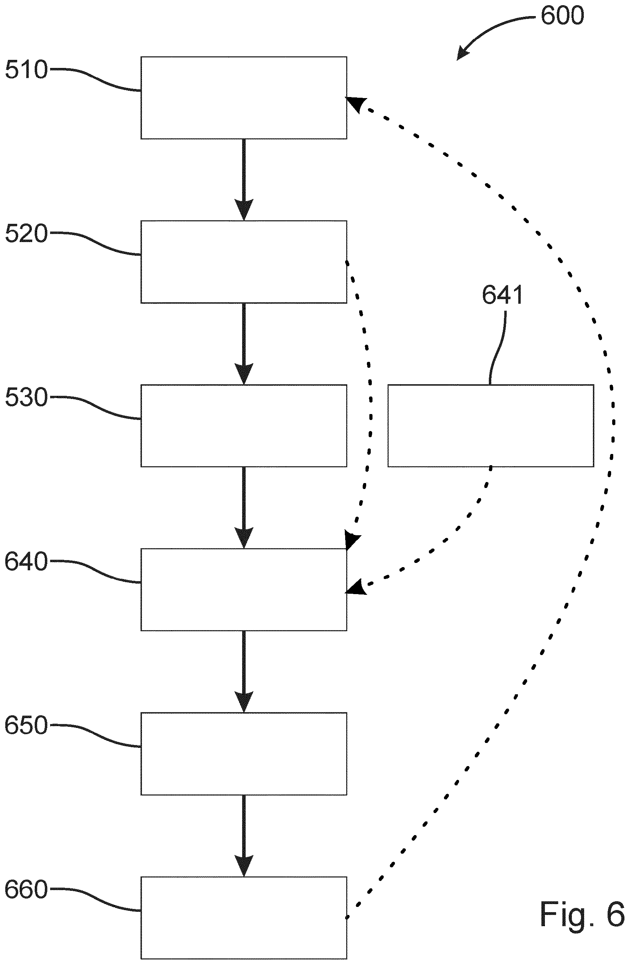

FIG 6 schematically illustrates a method 600 of controlling the cycloidal marine propulsion system employing the direction and/or the magnitude of the force acting upon the cycloidal marine propulsion system. The method 600 comprises the method 500. The direction and/or the magnitude of the force acting upon the cycloidal marine propulsion system, as determined 530 particularly by the force measurement system is received 640 by a propulsion control system. The propulsion control system receives 640 the direction and/or the magnitude of a force acting upon the first component of the cycloidal marine propulsion system as determined 520 in method 500, in particular to receive a more detailed set of data describing the cycloidal marine propulsion system.

In some embodiments, the propulsion control system may receive information 641 on other parameters of the marine vessel and/or of environment conditions to advantageously provide additional information for controlling the cycloidal marine propulsion system. In particular, the information 641 received comprises a propulsion set point, exemplarily provided by an operator, or a cycloidal marine propulsion system setting, exemplarily a pitch of the rotating blades or a rotation speed of the rotating wheel. The environment condition may comprise a marine current, a water temperature or a sea floor topography.

The propulsion control system processes the received direction and the magnitude of the force acting upon the cycloidal marine propulsion system and the information 641 to control 650 the cycloidal marine propulsion system. In particular, the propulsion control system may employ a digital twin model to replicate a state of the cycloidal marine propulsion system and to test potential control strategies, exemplarily changes in the pitch of the blade or the rotating speed of the rotating wheel.

The propulsion control system typically implements 660 a modified control strategy if the propulsion set point changes or if the propulsion control system considers the modified control strategy to provide a more efficient control of the cycloidal marine propulsion system. In particular, the modified control strategy comprises new settings of the cycloidal marine propulsion system to drive the marine vessel. Implementing 660 a modified control strategy comprises changing the pitch of one or more of the rotating blades or changing the rotating speed of the rotating wheel. The method 600 may iteratively be employed to improve a control strategy of the cycloidal marine propulsion system.

## Claims

1. A force measurement system for a cycloidal marine propulsion system, comprising a rotating wheel (20), rotatable with respect to a hull (40) of a marine vessel, and a plurality of electrically driven rotating blades (30, 30a-30d) attached to the rotating wheel (20) and rotatable with respect to the rotating wheel (20), the force measurement system comprising:
at least two distance sensors (101, 102, 103, 301, 302, 310), each being configured to determine a signal of a distance between a first component of the cycloidal marine propulsion system, that is rotatable with respect to a second component of the cycloidal marine propulsion system, and the second component of the cycloidal marine propulsion system; and,
a force determining unit, configured to determine a direction and/or a magnitude of a force acting upon the first component of the cycloidal marine propulsion system using the signals of the distance sensors (101, 102, 103, 301, 302, 310).

2. The force measurement system of claim 1, wherein the force determining unit is further configured to determine a direction and/or a magnitude of a force acting upon the cycloidal marine propulsion system based on the force acting upon the first component of the cycloidal marine propulsion system.

3. The force measurement system of any of claims 1 or 2, wherein determining the direction and/or the magnitude of the force acting upon the first component of the cycloidal marine propulsion system comprises averaging the signal of the distance over at least one rotation of the rotating wheel (20) of the cycloidal marine propulsion system.

4. The force measurement system of any of claims 1 to 3, wherein the first component of the cycloidal marine propulsion system is a rotating blade (30, 30a-30d) of the plurality of rotating blades (30, 30a-30d) and the second component of the cycloidal marine propulsion system is the rotating wheel (20) of the cycloidal marine propulsion system, particularly wherein the rotating blade (30, 30a-30d) is supported in the rotating wheel (20) by an upper bearing (32) and by a lower bearing (33); the distance sensors (301, 302, 310) being arranged between the upper bearing (32) and the lower bearing (33).

5. The force measurement system of claim 4, further comprising at least two distance sensors (301, 302, 310) for each rotating blade (30, 30a-30d) of the plurality of rotating blades (30, 30a-30d), wherein the force determining unit is configured to determine a direction and/or a magnitude of a force acting upon the rotating wheel (20) by employing signals of the distance sensors (301, 302, 310) of the plurality of rotating blades (30, 30a-30d).

6. The force measurement system of any of claims 4 to 5, wherein the force determining unit is configured to receive information on an angular rotating position of the rotating wheel (20) and wherein the force determining unit employs the angular position of the rotating wheel (20) to determine the direction and the magnitude of the force acting upon the rotating wheel (20).

7. The force measurement system of any of claims 1 to 3, wherein the first component of the cycloidal marine propulsion system is the rotating wheel (20) of the cycloidal marine propulsion system and the second component is a recess (41) of the hull (40) configured for receiving the rotating wheel (20) of the cycloidal marine propulsion system.

8. The force measurement system of claim 7, wherein the cycloidal marine propulsion system defines a vertical axis (50) and
wherein the distance sensors (101, 102, 103) are arranged at substantially the same position (10a) on the vertical axis as the lower bearing (21) supporting the rotating blade (30a) of the rotating wheel (20), or
wherein the distance sensors (101, 102, 103) are arranged between a support bearing (22) of the rotating wheel (20) and a rotor (24) of a rotating wheel electric motor driving the rotating wheel (20), or
wherein the distance sensors (101, 102, 103) are arranged between a motor cover (42) and the rotor (24) of the rotating wheel electric motor driving the rotating wheel (20).

9. The force measurement system of any of claims 7 to 8, further comprising at least two additional distance sensors (301, 302), each being configured to determine a signal of a distance between a rotating blade (30) of the plurality of rotating blades (30, 30a-30d) and the rotating wheel (20) of the cycloidal marine propulsion system;
wherein the force determining unit is configured to determine the direction and/or the magnitude of a force acting upon the rotating blade (30) using the signal of the additional distance sensors (301, 302); and
wherein the force determining unit is configured to determine the direction and/or the magnitude of a force acting upon the cycloidal marine propulsion system based on the force acting upon the rotating wheel (20) and the force acting upon the rotating blade (30) of the cycloidal marine propulsion system.

10. A cycloidal marine propulsion system comprising a force measurement system according to any of the preceding claims.

11. A marine vessel comprising a cycloidal marine propulsion system according to claim 10.

12. A method (500, 600) of measuring a direction and/or a magnitude of a force acting upon a cycloidal marine propulsion system, comprising a rotating wheel (20) and a plurality of electrically driven rotating blades (30, 30a-30d) attached to the rotating wheel (20), the method comprising:
determining (510), in at least two directions, a distance between a first component of the cycloidal marine propulsion system, that is rotatable with respect to a second component of the cycloidal marine propulsion system, and the second component of the cycloidal marine propulsion system;
determining (520) a direction and/or a magnitude of a force acting upon the first component of the cycloidal marine propulsion system based on the distances;
determining (530) the direction and/or the magnitude of the force acting upon the cycloidal marine propulsion system based on the direction and/or the magnitude of the force acting upon the first component of the cycloidal marine propulsion system.

13. The method of claim 12, wherein determining the direction and/or the magnitude of the force acting upon the first component of the cycloidal marine propulsion system comprises a comparison with calibration data and/or simulating the first component in a digital twin based on the distances.

14. The method of any of claims 12 to 13, wherein determining the direction and/or the magnitude of the force acting upon the cycloidal marine propulsion system comprises simulating the cycloidal marine propulsion system in a digital twin based upon the direction and/or the magnitude of the force acting upon the first component of the cycloidal marine propulsion system.

15. A method of controlling a cycloidal marine propulsion system according to claim 10, using a force information obtained from a force measurement system according to any of claims 1-9.
